# EUROPÄISCHE PATENTANMELDUNG

(11) **EP 1 617 088 A1**
(43) Veröffentlichungstag der Anmeldung: **18.01.2006**
(21) Anmeldenummer: 04016375.0
(22) Anmeldetag: 13.07.2004
(51) Int. Cl.: F16B 7/18, B25J 18/00

(54) **Trageinrichtung**

(71) Anmelder: NORGREN Automotive GmbH, 65462 Ginsheim-Gustavsburg (DE)
(72) Erfinder: Oerder, Markus, 61479 Glashütten (DE); Huppmann, Sascha, 55278 Mommenheim (DE); Boettcher, Michael, 65396 Walluf (DE); Strzempek, Otto, 65366 Geisenheim (DE)
(74) Vertreter: Quermann, Helmut

(57) **Zusammenfassung**

Die Erfindung schlägt eine Trageinrichtung, insbesondere zur Anbindung an Roboterarme und für die Anbindung von Werkzeugen, wie Spann-, Greif-, Saugeinrichtungen und sonstige Hilfsmittel, wie Ventilen, Sensoren oder dergleichen vor. Die Trageinrichtung weist mindestens zwei gerade Stangen (1, 1) auf, die im Bereich einander zugewandter Stangenenden (8, 8) mittels eines Adapters (9) verbindbar sind. Bezogen auf die einander zugewandter Stangenenden ist die Stirnfläche der jeweiligen Stange (1) senkrecht zur Längsachse (3) dieser Stange angeordnet. Die Längsachsen der beiden Stangen sind unter einem Winkel zueinander angeordnet und es weist der Adapter (9) ein Stützelement (16) auf, das die Stirnflächen der Stangen kontaktiert.

## Beschreibung

Die Erfindung betrifft eine Trageinrichtung, insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dergleichen, mit mindestens zwei geraden Stangen, die mittels eines Adapters verbindbar sind, wobei die Stirnflächen der Stangen senkrecht zu den Längsachsen dieser Stangen angeordnet sind.

Eine solche Trageinrichtung ist aus der EP 1 041 295 A1 bekannt. Bei dieser sind die einzelnen Stangen in Abstand von deren Stangenenden mit benachbarten Stangen mittels Adaptern verbunden. Die Stangenenden der quer zu einer Hauptstange angeordneten Stange nehmen die Werkzeuge auf.

Es sind bei Trageinrichtungen Anwendungsfälle denkbar, bei denen die Stangen im Bereich deren zugewandten Stangenenden miteinander zu verbinden sind. Hierbei erfolgt die Positionierung der Stangen in aller Regel Stoß auf Stoß, wie es beispielsweise in der US-A-5 785 359 beschrieben ist. Die Stirnfläche der jeweiligen Stange ist senkrecht zur Längsachse dieser Stange angeordnet, so dass die Stirnflächen aneinanderliegend positioniert sind, zum Verlängern der Stangenanordnung, oder eine Stange mit deren Stirnfläche die Seitenfläche der anderen Stirnfläche kontaktiert, womit ein Gebilde geschaffen wird, bei dem die Stangen unter einem Winkel von 90° zueinander angeordnet sind.

Aufgabe der vorliegenden Erfindung ist es, eine baulich einfach gestaltete, steife und kostengünstige Verbindung zweier Stangenenden bei einer Trageinrichtung zu schaffen, wobei die Längsachsen der Stangen einen Winkel zueinander einschließen, der ungleich 0° oder 90° ist.

Die Erfindung schlägt eine Trageinrichtung vor, insbesondere zur Anbindung an Roboterarme und für die Anbindung von Werkzeugen, wie Spann-, Greif-, Saugeinrichtungen und sonstigen Hilfsmitteln, wie Ventilen, Sensoren oder dergleichen, mit mindestens zwei geraden Stangen, die im Bereich einander zugewandter Stangenenden mittels eines Adapters verbindbar sind, wobei, bezogen auf die einander zugewandten Stangenenden, die Stirnfläche der jeweiligen Stange senkrecht zur Längsachse dieser Stange angeordnet ist, wobei ferner die Längsachsen der beiden Stangen unter einem Winkel zueinander angeordnet sind und der Adapter ein Stützelement aufweist, das die Stirnflächen der Stangen kontaktiert.

Bei der erfindungsgemäßen Trageinrichtung ist von besonderem Vorteil, dass Winkelanordnungen der beiden Stangen ungleich 0° oder 90°, bezogen auf die Längsachsen der beiden Stangen, erzielt werden können, ohne die Gestaltung der Stangen zu verändern, somit die Position der interessierenden Stirnfläche der jeweiligen Stange beizubehalten, nämlich senkrecht zur Längsachse dieser Stange verlaufend. Es ist somit nicht erforderlich, die Stangenenden zu bearbeiten, dahingehend, dass die Stirnfläche der jeweiligen Stange unter einem von der Senkrechten zur Längsachse dieser Stange abweichenden Winkel angeordnet ist. Dies wäre mit einem erheblichen Bearbeitungsaufwand verbunden, insbesondere mit dem Nachteil, dass die für die Trageinrichtung zu fordernde Maßhaltigkeit nicht gewährleistet wäre. Um eine definierte Positionierung der in Abstand zueinander angeordneten Stirnflächen der Stangen zu gewährleisten, ist das Stützelement vorgesehen, an dem sich die Stirnflächen der Stangen abstützen. Somit ist eine starre Verbindung zwischen den Stangen über das Stützelement gewährleistet.

Es ist insbesondere daran gedacht, dass die Längsachsen der beiden Stangen unter einem Winkel von 30° bis 60°, insbesondere unter einem Winkel von 30°, 45° oder 60° zueinander angeordnet sind. Durch diese Winkelanordnung besteht die Möglichkeit, Trageinrichtungen, insbesondere zur Anbindung an Roboterarme und zur Anbindung von Werkzeugen, wesentlich universeller zu gestalten, wie bisherige Trageinrichtungen, bei denen die Stangen nur unter einem Winkel von 0° oder 90° zueinander angeordnet sind. - Die erfindungsgemäße Trageinrichtung ermöglicht es, die Roboterarme und Werkzeuge näher zu dem Ort anzuordnen, an dem die Arbeitsvorgänge vonstatten gehen müssen. Hierdurch lassen sich Verfahrwege wesentlich reduzieren und damit auch die Maßhaltigkeit bei der Produktion verbessern, weil insbesondere lange Fahrwege nachteilige Auswirkungen unter dem Aspekt der Durchbiegung und Torsion der Trageinrichtung bedingen.

Vorteilhaft weist die jeweilige Stange im wesentlichen rechteckigen, insbesondere quadratischen Querschnitt auf. Diese Gestaltung ermöglicht eine unkomplizierte und einfache Anbindung der benachbarten Stange und der Roboterarme sowie Werkzeuge. Es stehen aufgrund der Gestaltung der jeweiligen Stange mit rechteckigem Querschnitt vier Seitenflächen zur Anbindung dieser Bauteile zur Verfügung.

Von Vorteil ist es, wenn die jeweilige Stange mit mehreren, parallel zu deren Längsachse angeordneten hinterschnittenen Nuten versehen ist. Dies ermöglicht es, da eine Längsverschiebung in Längsrichtung der Nuten möglich ist, die Roboterarme bzw. Werkzeuge variabel zu positionieren und darüber hinaus ist eine variable Anbindung der beiden Stangen möglich.

Von großem Vorteil ist es, wenn die hinterschnittenen Nuten der Aufnahme von in Längsrichtung der Nuten verschiebbaren Klemmstücken dienen, wobei mit den Klemmstücken der Adapter verbindbar, insbesondere verschraubbar ist. Auf diese Art und Weise lässt sich eine einfache Möglichkeit der Verbindung von Adapter und jeweiliger Stange erreichen.

Der Adapter dient der Verbindung jeweils zweier der Stangen im Bereich deren zugewandten Stangenenden. Gemäß einer besonderen Ausführungsform der Erfindung ist vorgesehen, dass der Adapter eine Winkelanbindung und eine Deckplatte aufweist, die mit den Stangen bzw. Klemmstücken verbindbar sind, wobei die Winkelanbindung und die Deckplatte mindestens drei der vier Seitenflächen der rechteckigen Querschnitt aufweisenden Stange kontaktieren. Durch diese Art der Anbindung bzw. Verbindung ist eine steife Kupplung der beiden Stangen gewährleistet. Die Verbindung zeichnet sich durch eine hohe Steifigkeit bezüglich Biegung und Torsion aus. Die Deckplatte kontaktiert eine Seitenfläche, während die Winkelanbindung zwei Seitenflächen der jeweiligen Stange kontaktiert.

Die Winkelanbindung ist insbesondere durch eine Bodenplatte und eine Schulterplatte gebildet. Die Bodenplatte ist als ebenes Bauteil ausgebildet, die entsprechend dem Winkel der zueinander angeordneten Stangen abgewinkelt ist. Die Schulterplatte ist nicht als ebenes Bauteil ausgebildet, sondern abgewinkelt, entsprechend der Winkelanordnung der beiden Stangen. Zweckmäßig ist die Schulterplatte mittels einer Verstärkung versteift, wobei die Verstärkung als Strebe ausgebildet ist, die mit den Plattenabschnitten der abgewinkelten Schulterplatte die Form eines Dreiecks bildet.

Das Stützelement, dem die Funktion zukommt, die zugewandten Stirnflächen der Stangen abzustützen, kann auf unterschiedliche Art und Weise ausgebildet sein. Es wird als bevorzugt angesehen, wenn das Stützelement als Zylinderstift ausgebildet ist. Die Stirnflächen der beiden Stangen liegen somit jeweils entlang einer Linie am Zylinderstift an. Der Zylinderstift stellt ein einfach herzustellendes Bauteil dar. Er wird insbesondere zwischen der Deckplatte und der Winkelanbindung positioniert. Die Verbindung zwischen Zylinderstift und diesen Teilen erfolgt zweckmäßig durch Verschrauben. Die Schrauben durchsetzen eine Bohrung in der Deckplatte und der Bodenplatte sowie zentrische Bohrungen im Zylinderstift.

Gemäß einer anderen Variante ist vorgesehen, dass das Stützelement Bestandteil der Deckplatte oder der Winkelanbindung bildet. Demzufolge bildet das Stützelement mit der Deckplatte oder der Winkelanbindung eine bauliche Einheit. Diese bauliche Einheit besteht beispielsweise aus Aluminiumguss. In diesem Fall weist das Stützelement insbesondere die Form eines Körpers mit dreieckförmigen Querschnitt auf, wobei der Spreizwinkel des Dreiecks dem Winkel entspricht, unter dem die beiden Stangen bezüglich deren Längsachse angeordnet sind. Demzufolge kontaktieren die Stirnflächen der beiden Stangen zwei der drei Seitenflächen des Stützelements. Bei einer solchen Gestaltung des Stützelements, das Bestandteil der Deckplatte oder der Winkelanbindung bildet, ist es nicht erforderlich, das Stützelement mittels separater Befestigungsmittel zu befestigen. Die Positionierung des Stützelements erfolgt durch Anbringen der Deckplatte oder der Winkelanbindung an den beiden Stangen.

Weitere Merkmale der Erfindung sind in den Unteransprüchen, der Beschreibung der Figuren und den Figuren selbst dargestellt, wobei bemerkt wird, dass Einzelmerkmale und alle Kombinationen von Einzelmerkmalen erfindungswesentlich sind.

In den Figuren ist die Erfindung anhand zweier Ausführungsformen beispielsweise dargestellt, ohne auf diese beschränkt zu sein. Es stellt dar:
- Figur 1:: eine perspektivische Darstellung einer ersten Ausführungsform der erfindungsgemäßen Trageinrichtung,
- Figur 2:: eine Draufsicht der in Figur 1 gezeigten Trageinrichtung, wobei die Stangenenden und das Stützelement mit veranschaulicht sind,
- Figur 3:: eine Explosionsdarstellung der in den Figuren 1 und 2 gezeigten Trageinrichtung, somit vor dem Verbinden der Teile der Trageinrichtung,
- Figur 4:: eine perspektivische Darstellung einer zweiten Ausführungsform der erfindungsgemäßen Trageinrichtung,
- Figur 5:: eine Draufsicht der in Figur 4 gezeigten Trageinrichtung, wobei die Stangenenden und das Stützelement mit veranschaulicht sind,
- Figur 6:: eine Explosionsdarstellung der in den Figuren 4 und 5 gezeigten Trageinrichtung, somit vor dem Verbinden der Teile der Trageinrichtung.

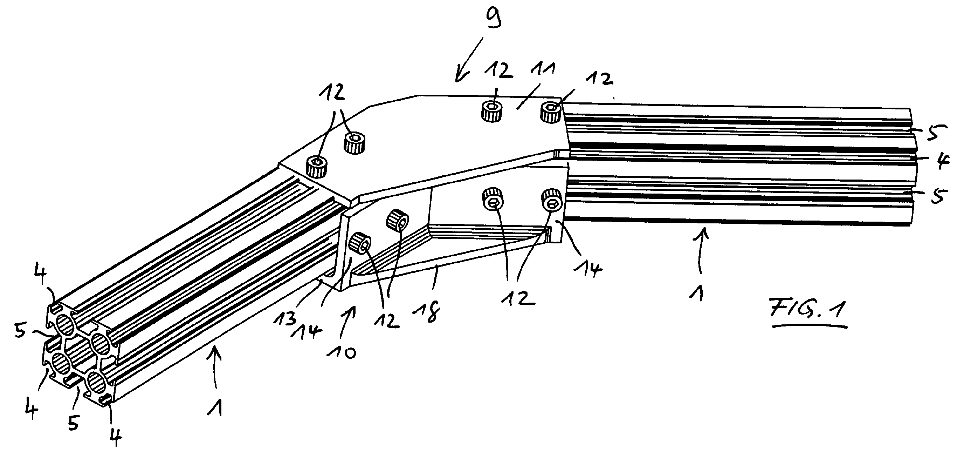

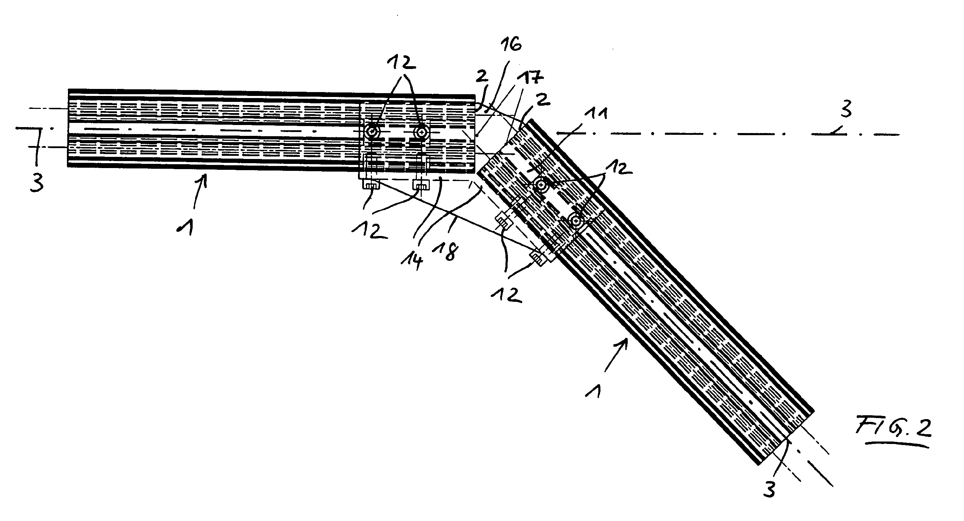

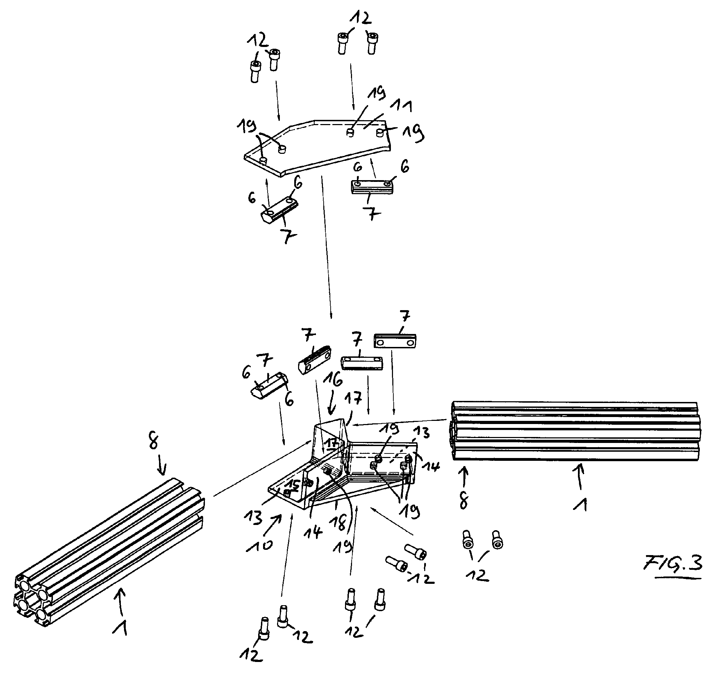

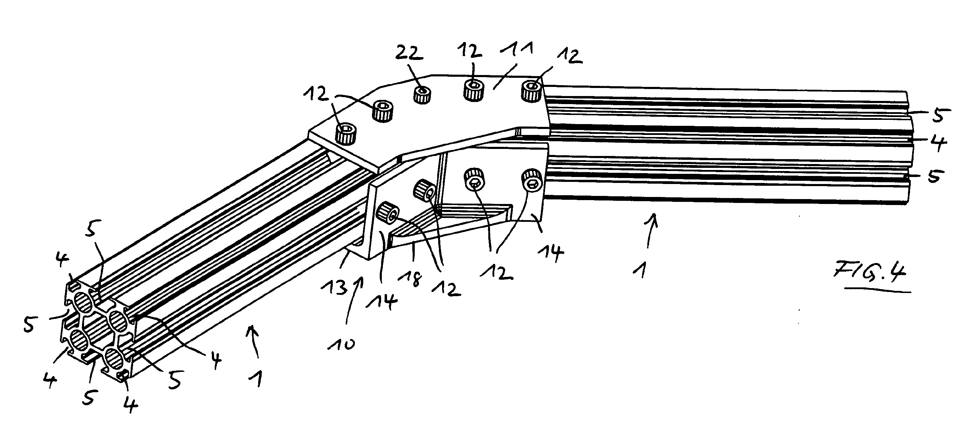

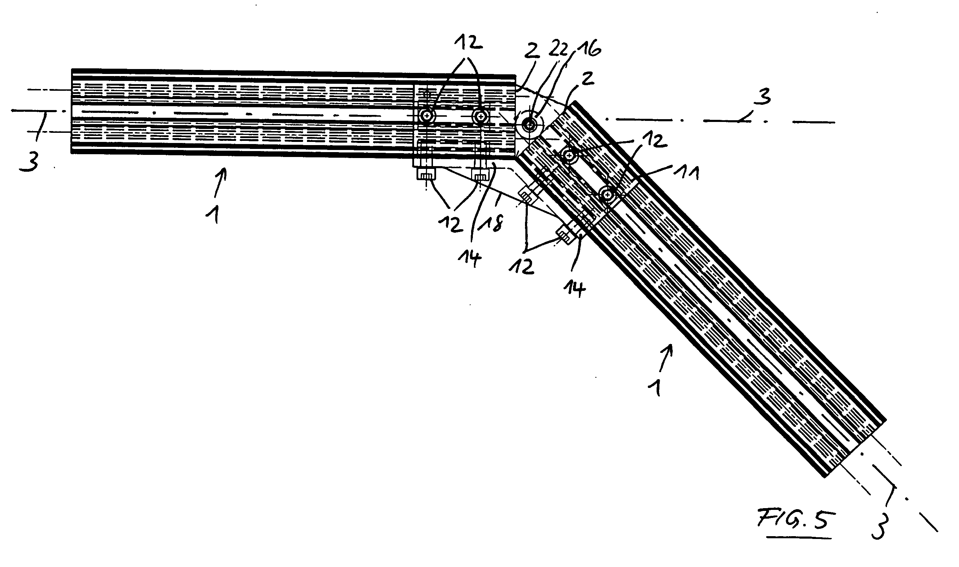

Bei der nachfolgenden Beschreibung der Figuren wird zunächst auf die erste Ausführungsform nach den Figuren 1 bis 3 Bezug genommen:
Es sind zwei Stangen 1 gezeigt, die eine beliebige Länge aufweisen können. Mit der Bezugsziffer 2 sind, bezüglich der einander zugewandten Stangenenden, die Stirnflächen der Stangen 1 bezeichnet. Die Stirnfläche 2 der jeweiligen Stange 1 ist senkrecht zur Längsachse 3 dieser Stange angeordnet. Die über die eine Stange 1 hinaus verlängerte Längsachse 3 schließt mit der Längsachse 3 der anderen Stange 1 einen Winkel von 45° ein. Die andere Stirnfläche der jeweiligen Stange 1 ist gleichfalls senkrecht zur Längsachse 3 dieser Stange 1 angeordnet.

Die jeweilige Stange 1 ist als Profilstange ausgebildet. Es handelt sich um ein im wesentlichen quadratischen Querschnitt aufweisendes Hohlprofil. Im Bereich der Ecken dieses Hohlprofils sind vier sich über die Länge der Stange 1 verlaufende Nuten 4 vorgesehen. Vier weitere Nuten 5 erstrecken sich gleichfalls über die Länge der jeweiligen Stange, sie sind im Bereich einer Seitenfläche der Stange 1, somit jeweils zwischen zwei Nuten 4 angeordnet. Die Nuten 4 bzw. 5 sind jeweils als hinterschnittene Nuten ausgebildet und dienen der Aufnahme von Gewindebohrungen 6 aufweisenden Klemmstücken 7. Beim Ausführungsbeispiel werden diese Klemmstücke 7 aber nur in drei der vier Nuten 5 eingeführt. - Im Sinne der Erfindung kommen selbstverständlich andere Profilquerschnitte für die Stangen 1 in Frage.

Der Verbindung der beiden Stangen 1 im Bereich deren Stangenenden 8 dient ein Adapter 9. Dieser weist eine Winkelanbindung 10 und eine Deckplatte 11 auf. Diese sind mit den in die Nuten 5 der Stangen 1 einschiebbaren Klemmstücken 7 mittels Schrauben 12 verbindbar.

Im einzelnen ist die Winkelanbindung 10 durch eine Bodenplatte 13 und eine Schulterplatte 14 gebildet. Die Schulterplatte 14 ist senkrecht zur Kontaktfläche 15 der Bodenplatte 13 an den Stangen 1 positioniert. Entsprechend dem 45°-Winkel der beiden Längsachsen 3 der Stangen 1 zueinander, knickt die Bodenplatte 13 um 45° ab. Auch die Schulterplatte 14 knickt, im Bereich deren halben Länge, um diesen Winkel ab. Ein Stützelement 16 bildet eine Baueinheit mit der Winkelanbindung 10. Das Stützelement besitzt die Form eines Körpers mit dreieckigem Querschnitt, wobei der Spreizwinkel des Dreiecks dem Winkel entspricht, unter dem die beiden Stangen 1 bezüglich deren Längsachsen 3 angeordnet sind, vorstehend somit einem Winkel von 45°. Die beiden im Winkel von 45° divergierenden Seitenflächen 17 des Stützelements 16 dienen der Kontaktierung der Stirnflächen 2 der Stangen 1. Im Bereich der voneinander wegweisenden Enden der Schulterplatte 14 ist, benachbart der Bodenplatte 13 eine Strebe 18 mit der Schulterplatte 14 verbunden und dient damit der Versteifung des Adapters 9.

Zum Verbinden der beiden Stangen 1 unter dem gemäß der Ausführungsform gewünschten Winkel von 45° wird zunächst der Adapter 9 mit der einen Stange 1 verbunden. Zuvor sind die Schrauben 12 durch die paarweise in der Deckplatte 11, der Bodenplatte 13 und der Schulterplatte 14 vorgesehenen Löcher 19 hindurch gesteckt und in die Gewindebohrungen 6 der drei dazugehörigen Klemmstücke 7 eingeschraubt worden. Dann wird der Adapter 9 in Längsrichtung der Stange 1 auf diese aufgesteckt, wobei die drei Klemmstücke 7 in die zugeordneten drei Nuten 5 eingeführt werden. In der eingeführten Stellung kontaktiert das Stützelement 16 mit der einen Seitenfläche 17 die Stirnfläche 2 der zugeordneten Stange 1. Es werden dann die Schrauben 12 angezogen, womit sich das Klemmstück 7 in der jeweiligen Nut 5 verspannt. In entsprechender Art und Weise werden die anderen Klemmstücke 7 mit dem Adapter 9 im Bereich der anderen Seite von der Bodenplatte 13 und Schulterplatte 14 sowie Deckplatte 11 verbunden und anschließend die andere Stange 1 mit ihrer Stirnfläche 2 gegen die andere Seitenfläche 17 des Stützelements 16 positioniert. Schließlich werden die dieser Stange 1 zugeordneten Schrauben 12 angezogen, womit die Klemmstücke 7, die in diese Stange 1 eingeführt sind, in den Nuten 5 dieser Stange 1 verspannt werden. Hiermit ist die Verbindung der beiden Stangen 1 bewerkstelligt.

Um andere Knickwinkel der Stangenverbindung zu erzielen, beispielsweise einen solchen von 30°, ist es nur erforderlich den Knickwinkel des Adapters 9, also den Knickwinkel von der Deckplatte 11, Bodenplatte 13 und Schulterplatte 14 zu ändern.

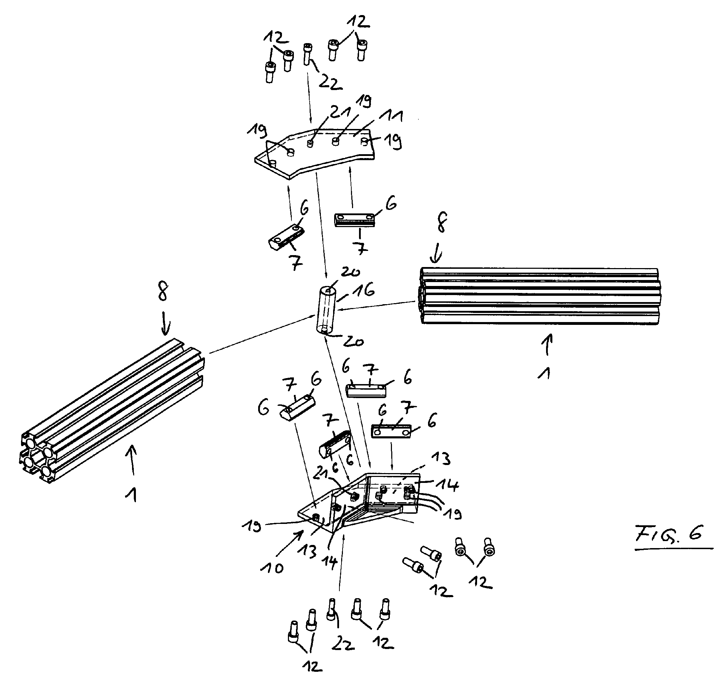

Nachfolgend wird die zweite Ausführungsform gemäß der Figuren 4 bis 6 beschrieben: Diese Ausführungsform stimmt weitreichend mit derjenigen nach den Figuren 1 bis 3 überein. Insofern sind Bauteile gemäß der zweiten Ausführungsform, die mit solchen der ersten Ausführungsform übereinstimmen, mit denselben Bezugszeichen bezeichnet.

Die Trageinrichtung nach der zweiten Ausführungsform unterscheidet sich von derjenigen nach der ersten Ausführungsform dadurch, dass das Stützelement 16 ein separates Bauteil darstellt, somit keine bauliche Einheit mit der Winkelanbindung 10 darstellt. Das Stützelement 16 ist als Zylinderstift ausgebildet, der zwischen der Deckplatte 11 und der Bodenplatte 13 positioniert wird, dessen Länge somit dem Abstand von Bodenplatte 13 und Deckplatte 11 entspricht. Der Zylinderstift 16 ist auf seiner Ober- und Unterseite mit einer zentralen Gewindebohrung 20 versehen. Im Bereich der Knickebene des Adapters 9 ist die Deckplatte 11 und die Bodenplatte 13 jeweils mit einer Bohrung 21 versehen. Zwei Schrauben 22 dienen der Befestigung des Zylinderstifts 16 an der Bodenplatte 13 und der Deckplatte 11. Die Schrauben durchsetzen die Bohrungen 21 und sind in die Gewindebohrungen 20 eingeschraubt. - Bei dieser Ausbildung des Stützelements 16 als Zylinderstift kontaktieren im montiertem Zustand der Trageinrichtung die beiden Stirnflächen 2 der Stangen 1 den Zylinderstift 16. Die Kontaktierung erfolgt im Bereich der jeweiligen Stirnfläche 2 längs einer parallel zur Längsachse des Zylinderstifts verlaufenden Linie.

## Patentansprüche

1. Trageinrichtung, insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dergleichen mit mindestens zwei geraden Stangen (1, 1) die im Bereich einander zugewandter Stangenenden (8, 8) mittels eines Adapters (9) verbindbar sind, wobei, bezogen auf die einander zugewandten Stangenenden (8, 8), die Stirnfläche (2) der jeweiligen Stange (1) senkrecht zur Längsachse (3) dieser Stange (1) angeordnet ist, wobei ferner die Längsachsen (3, 3) der beiden Stangen (1, 1) unter einem Winkel zueinander angeordnet sind und der Adapter (9) ein Stützelement (16) aufweist, das die Stirnflächen (2, 2) der Stangen (1, 1) kontaktiert.

2. Trageinrichtung nach Anspruch 1, wobei die Längsachsen (3, 3) der beiden Stangen (1, 1) unter einem Winkel von 30° bis 60°, insbesondere unter einem Winkel von 30°, 45° oder 60° zueinander angeordnet sind.

3. Trageinrichtung nach Anspruch 1 oder 2, wobei die jeweilige Stange (1) im wesentlichen rechteckigen, insbesondere quadratischen Querschnitt aufweist.

4. Trageinrichtung nach einem der Ansprüche 1 bis 3, wobei die jeweilige Stange (1) mit mehreren, parallel zu deren Längsachse (3) angeordneten, hinterschnittenen Nuten (4, 5) versehen ist.

5. Trageinrichtung nach Anspruch 4, wobei die hinterschnittenen Nuten (5) der Aufnahme von in Längsrichtung der Nuten (5) verschiebbaren Klemmstücken (7) dienen, wobei mit den Klemmstücken (7) der Adapter (9) verbindbar, insbesondere verschraubbar ist.

6. Trageinrichtung nach einem der Ansprüche 3 bis 5, wobei der Adapter (9) eine Winkelanbindung (10) und eine Deckplatte (11) aufweist, die mit den Stangen (1, 1) bzw. Klemmstücken (7) verbindbar sind, wobei die Winkelanbindung (10) und die Deckplatte (11) mindestens drei der vier Seitenflächen der rechteckigen Querschnitt aufweisenden Stange (1) kontaktieren.

7. Trageinrichtung nach Anspruch 6, wobei die Winkelanbindung (10) durch eine Bodenplatte (13) und eine Schulterplatte (14), insbesondere eine Senkrechte zur Kontaktfläche (15) der Bodenplatte (13) an den Stangen (1, 1) angeordnete Schulterplatte (14), gebildet ist.

8. Trageinrichtung nach Anspruch 7, wobei die Schulterplatte (14) mittels einer Verstärkung (18) versteift ist, wobei die Verstärkung (18) als Strebe ausgebildet ist, die mit den Plattenabschnitten der abgewickelten Schulterplatte (14) die Form eines Dreiecks bildet.

9. Trageinrichtung nach einem der Ansprüche 1 bis 8, wobei das Stützelement (16) als Zylinderstift ausgebildet ist, der zwischen der Deckplatte (11) und der Winkelanbindung (10), insbesondere der Bodenplatte (13) der Winkelanbindung (10) angeordnet ist, und mit diesen befestigt, insbesondere mit diesen verschraubt ist.

10. Trageinrichtung nach einem der Ansprüche 1 bis 8, wobei das Stützelement (16) Bestandteil der Deckplatte (11) oder der Winkelanbindung (10) bildet, und insbesondere die Form eines Körpers mit dreieckförmigem Querschnitt aufweist, wobei der Spreizwinkel des Dreiecks dem Winkel entspricht, unter dem die beiden Stangen (1, 1) bezüglich deren Längsachsen (3, 3) angeordnet sind.
